# EUROPEAN PATENT APPLICATION

(11) **EP 4 254 171 A1**
(43) Date of publication of application: **04.10.2023**
(21) Application number: 22215501.2
(22) Date of filing: 21.12.2022
(51) Int. Cl.: G06F 8/60, G06F 9/445

(54) **GENERATION PROGRAM, GENERATION METHOD, AND INFORMATION PROCESSING DEVICE**

(30) Priority: 29.03.2022 JP 2022054253
(71) Applicant: FUJITSU LIMITED, Kawasaki-shi, Kanagawa 211-8588 (JP)
(72) Inventor: ISHIDA, Kengo, Kawasaki-shi, Kanagawa, 211-8588 (JP); OMISHIMA, Senchi, Kawasaki-shi, Kanagawa, 211-8588 (JP)
(74) Representative: Hoffmann Eitle

(57) **Abstract**

A generation program that causes at least one computer to execute a process, the process includes acquiring first information that indicates a type of a first application to be deployed to a system, a programming language to be used for development of the first application, a framework to be used for the development of the first application; selecting a first template that corresponds to the first information from among a plurality of templates of setting information to be used for deployment of an application, the plurality of templates being associated with a type of the application, a programming language to be used for development of the application, and a framework to be used for the development of the application; and generating first setting information to be used for the deployment of the first application based on the selected first template.

## Description

### FIELD

The embodiments discussed herein are related to a generation program, a generation method, and an information processing device.

### BACKGROUND

One of virtualization techniques in computers is a technique called container-type virtualization. In the container-type virtualization, a container that collects resources such as a library to be used to activate an application is defined as a software execution environment. For example, a node implemented by a computer can form a container on the node by executing a container engine. The node may be a physical machine having resources such as a central processing unit (CPU) and a random access memory (RAM) or may be a virtual machine that operates on the physical machine.

Note that a system that supports development of application software using a visual programming tool has been proposed. The visual programming tool enables the development of application software by describing model diagrams without describing source codes.

Japanese Laid-open Patent Publication No. 2020-135154 is disclosed as related art.

### SUMMARY

### [TECHNICAL PROBLEM]

When developing an application, a developer may create setting information to be used to deploy the application to a system according to an execution environment, such as a container for running the application, for example, in addition to developing a code body of the application. However, description of the setting information is complicated. Therefore, a task of creating the setting information may reduce the efficiency of the development of the application.

In one aspect, the present embodiments aim to improve the efficiency of development of an application.

### [SOLUTION TO PROBLEM]

According to an aspect of the embodiments, a generation program that causes at least one computer to execute a process, the process includes acquiring first information that indicates a type of a first application to be deployed to a system, a programming language to be used for development of the first application, a framework to be used for the development of the first application; selecting a first template that corresponds to the first information from among a plurality of templates of setting information to be used for deployment of an application, the plurality of templates being associated with a type of the application, a programming language to be used for development of the application, and a framework to be used for the development of the application; and generating first setting information to be used for the deployment of the first application based on the selected first template.

### [ADVANTAGEOUS EFFECTS OF INVENTION]

In one aspect, the efficiency of application development is improved.

### BRIEF DESCRIPTION OF DRAWINGS

FIG. 1 is a diagram for describing an information processing device according to a first embodiment;
FIG. 2 is a diagram illustrating an example of an information processing system according to a second embodiment;
FIG. 3 is a diagram illustrating a hardware example of the information processing device;
FIG. 4 is a diagram illustrating a functional example of the information processing system;
FIG. 5 is a diagram illustrating an example of a management table;
FIG. 6 is a diagram illustrating an example of a manifest setting value management table;
FIG. 7 is a diagram illustrating an example of an app template generation setting file;
FIG. 8 is a diagram illustrating an acquisition example of a code of an app and container build setting information;
FIG. 9 is a diagram illustrating an acquisition example of a manifest information template and setting value information;
FIG. 10 is a diagram illustrating an example of the container build setting information;
FIG. 11 is a diagram illustrating an example of the manifest information template;
FIG. 12 is a diagram illustrating an example of the setting value information for the manifest information template;
FIG. 13 is a diagram illustrating an example of an app template deployment setting file;
FIG. 14 is a flowchart illustrating a first processing example of the information processing device;
FIG. 15 is a flowchart illustrating a second processing example of the information processing device;
FIG. 16 is a diagram illustrating a generation example of manifest information;
FIG. 17 is a diagram illustrating an example of the generated manifest information; and
FIG. 18 is a diagram illustrating an example (continued) of the generated manifest information.

### DESCRIPTION OF EMBODIMENTS

Hereinafter, the present embodiments will be described with reference to the drawings.

### [First Embodiment]

A first embodiment will be described.

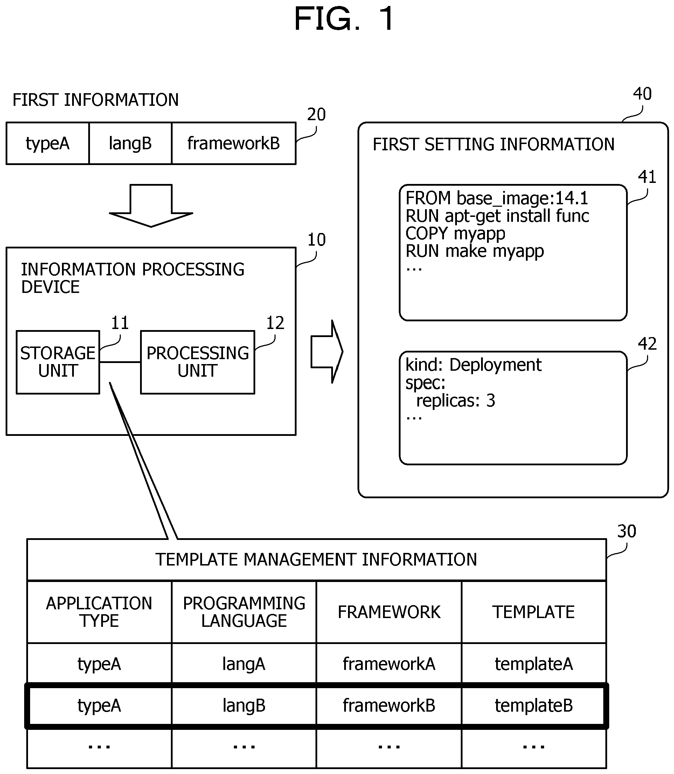

FIG. 1 is a diagram for describing an information processing device according to a first embodiment.

An information processing device 10 supports development of an application by a user. The application runs on a container, for example. The container is executed by a system that includes a plurality of nodes such as physical machines and virtual machines. In FIG. 1, illustration of the system is omitted.

The information processing device 10 includes a storage unit 11 and a processing unit 12. The storage unit 11 may be a volatile storage device such as a random access memory (RAM) or may be a non-volatile storage device such as a hard disk drive (HDD) or a flash memory. The processing unit 12 may include a central processing unit (CPU), a digital signal processor (DSP), an application specific integrated circuit (ASIC), a field programmable gate array (FPGA), or the like. The processing unit 12 may be a processor that executes a program. The "processor" may include a set of a plurality of processors (multiprocessor).

The processing unit 12 automatically generates setting information to be used when deploying the application to the system on the basis of first information 20 and template management information 30. The setting information may include, for example, container build setting information to be used to build a container image based on a source code of the application, and manifest information to be used to deploy the application to the system using the container image.

For example, in a case where Docker (registered trademark) is used as an execution environment of the container, information called Dockerfile is an example of the container build setting information. Note that software other than Docker may be used for the execution environment of the container. Furthermore, OpenShift (registered trademark) and Kubernetes (registered trademark) are sometimes used for container orchestration tools that perform integrated management of containers to be executed by the system. In this case, information called a K8s manifest is an example of the manifest information. Note that software other than OpenShift and Kubernetes may be used for the container orchestration tools.

The storage unit 11 stores the template management information 30. The template management information 30 is information indicating a plurality of templates of setting information to be used for deployment of the application, the templates being associated with a type of the application, a programming language, and a framework. The type of the application, that is, an application type, indicates, for example, "front end", "back end", "rest application programming interface (API)", "database", or the like. The programming language indicates a programming language to be used for the development of the application. The framework indicates a framework to be used for the development of the application. The information indicating a template may be identification information indicating a location of the template, or may be a body of the template. The identification information indicating the location of the template is, for example, a uniform resource locator (URL). In the case where the setting information includes the container build setting information and the manifest information, the template of the setting information includes information corresponding to each of the container build setting information and the manifest information.

For example, the template management information 30 includes records of application type "typeA", programming language "langA", framework "frameworkA" and template "templateA". The template management information 30 includes records of the application type "typeA", programming language "langB", framework "frameworkB" and template "templateB". The template management information 30 may include other records indicating templates for other combinations of the application types, programming languages, and frameworks. Furthermore, the template management information 30 may include information indicating a template of a source code of an application for a combination of the application type, the programming language, and the framework.

The processing unit 12 acquires the first information 20. The first information 20 is input to the information processing device 10 by the user, for example. The first information 20 is information indicating the type of a first application that the user actually intends to develop, the programming language to be used for development of the first application, and the framework to be used for the development of the first application.

After acquiring the first information 20, the processing unit 12 selects a first template corresponding to the first information 20 from among the plurality of templates indicated by the template management information 30. For example, the first information 20 indicates the application type "typeA", the programming language "langB" and the framework "frameworkB". In this case, the processing unit 12 selects the template "templateB" as the first template on the basis of the first information 20 and the template management information 30. In the case where the information indicating the template in the template management information 30 is the identification information indicating the location of the template, the processing unit 12 acquires the first template from a device that holds the body of the template on the basis of the identification information of the first template.

In the case where the template management information 30 includes the information indicating the template of the source code of the application for a combination of the application type, the programming language, and the framework, the processing unit 12 may acquire and output the template of the source code according to the first information 20 on the basis of the information. The user can create the source code of the application by editing the template of the output source code.

The processing unit 12 generates first setting information 40 to be used for deployment of the first application on the basis of the selected first template. The first setting information 40 includes container build setting information 41 and manifest information 42, for example.

For example, the processing unit 12 may use the container build setting information included in the first template as the container build setting information 41 as it is. The container build setting information 41 includes a version of a base image that is a base of the container image, a function name (for example, func) to be installed in the container image, and an identification name (for example, myapp) of the source code of the application. The user matches the identification name of the source code of the application created by the user itself, such as the file name and the like, with the identification name of the source code in the container build setting information 41. Then, the processing unit 12 can use the container build setting information 41 to acquire the source code corresponding to the appropriate identification name, and build the container image corresponding to the appropriate application.

Furthermore, the processing unit 12 may edit the template of the manifest information included in the first template to generate the manifest information 42. For example, the processing unit 12 may determine a setting value of a setting item included in the template of the manifest information according to a combination of one or more elements of the application type, the programming language, and the framework, and insert the setting value to the place of the setting item. For example, the processing unit 12 may determine the number of containers (replica count) for executing the appropriate application according to the application type. Furthermore, the processing unit 12 may determine CPU performance or a memory size of the container that executes the appropriate application according to the combination of the application type and the framework. The processing unit 12 may similarly determine the setting values for other setting items such as security and network that may be included in the manifest information 42.

Moreover, the processing unit 12 may receive input of predetermined information from the user and insert the information into the manifest information 42. For example, the predetermined information for receiving input from the user is identification information of an acquisition source of the container image, identification information of a deployment location of the application based on the container image, and the like.

The processing unit 12 can acquire the built container image using the generated manifest information 42 and deploy the application to the system at the deployment location.

Note that, in the above example, the first setting information 40 includes the container build setting information 41 and the manifest information 42, but the first setting information 40 may include only one of the container build setting information 41 and the manifest information 42.

According to the information processing device 10, the first information 20 indicating the type of the first application to be deployed to the system, the programming language to be used for the development of the first application, and the framework to be used for the development of the first application is acquired. When the first information 20 is acquired, the first template corresponding to the first information is selected from among the plurality of templates indicated by the template management information 30. The template management information 30 indicates the template of the setting information to be used for deployment of the application, the template being associated with the type of the application, the programming language, and the framework. The first setting information 40 to be used for the deployment of the first application is generated on the basis of the selected first template. Therefore, the information processing device 10 can improve the efficiency of the development of the application.

Here, the description of the setting information to be used for the deployment of the application to the system is complicated, and it is not easy for the user to create the setting information. Therefore, creation of the setting information may reduce the efficiency of the development of the application. Therefore, the information processing device 10 generates the first setting information 40 to be used for the deployment of the application according to the input of the first information 20. Therefore, the user can obtain the first setting information 40 by simply inputting the first information 20, so that the user's task of creating the first setting information 40 can be omitted, and the user can concentrate on the development of the code body of the application. Thus, the information processing device 10 can improve the efficiency of the development of the application. As described above, the description of the setting information to be used for the deployment of the application to the system is complicated. However, the inventor thought that the description of the setting information could be made into a template according to the information regarding the application, in other words, the combination of the pieces of information of the application type, the programming language, and the framework. Furthermore, the pieces of information of the application type, the programming language, and the framework included in the first information 20 are all information to be used in the application development. Therefore, for the user who develops the application, the first information 20 is information that the user can easily specify and describe. With the above configuration, the information processing device 10 can improve the efficiency of the development of the application.

Hereinafter, the functions of the information processing device 10 will be described in more detail by giving more specific examples.

### [Second Embodiment]

Next, a second embodiment will be described.

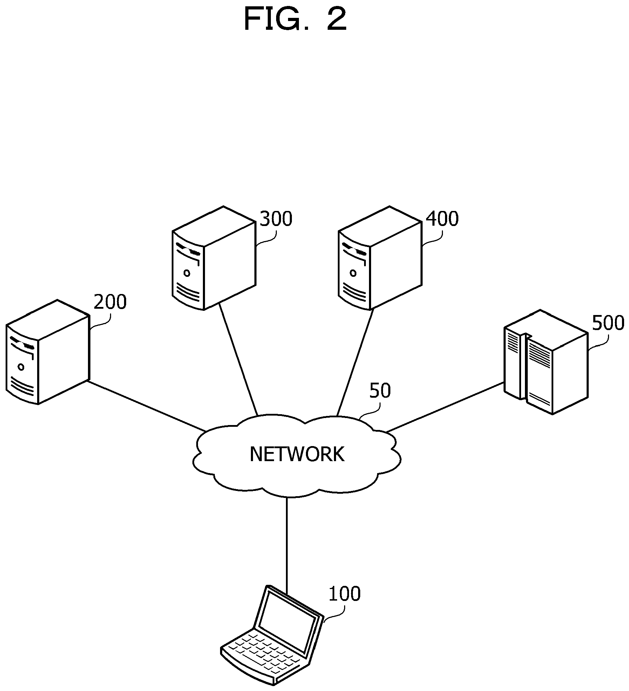

FIG. 2 is a diagram illustrating an example of an information processing system according to the second embodiment.

The information processing system of the second embodiment includes an information processing device 100, an app template management server 200, a development management server 300, a container image management server 400, and a container execution system 500. The information processing device 100, the app template management server 200, the development management server 300, the container image management server 400, and the container execution system 500 are connected to a network 50. The network 50 may be, for example, a local area network (LAN), a wide area network (WAN), or the Internet.

The information processing device 100 is a client computer operated by a user. The information processing device 100 is used for development of an application by the user. A framework according to a programming language can be used for the development of the application. The framework provides libraries, boilerplate code, and the like that provide general functions that are prepared in advance for the application to be developed. Furthermore, the application runs on a container. The information processing device 100 supports the development of the application by automatically generating setting information to be used to implement the application as a container.

The app template management server 200 is a server computer that manages an app template. The app template includes a template of a source code of the application, container build setting information to be used to build a container image containing the source code, and a template of manifest information to be used to deploy the application. The template of the source code of the application is created in advance in various programming languages. The app template management server 200 transmits an app template to the information processing device 100 in response to a request from the information processing device 100. Note that the source code is abbreviated as code. The template of the manifest information is abbreviated as manifest information template.

The development management server 300 is a server computer that performs development management of the application. The development management server 300 acquires the app template from the information processing device 100, holds the app template, and functions as a repository that manages an editing history of the code of the application included in the app template. For example, the information processing device 100 downloads the code of the application from the development management server 300, edits the code, uploads the edited code to the development management server 300, and causes the development management server 300 to perform version management and the like. The repository of the development management server 300 is, for example, a Git repository.

The container image management server 400 is a server computer that manages the container image. The container image management server 400 acquires and holds the container image built by the information processing device 100. The container image management server 400 provides the container image to the container execution system 500.

The container execution system 500 is a computer system that executes the container on the basis of an instruction from the information processing device 100. The container execution system 500 includes a plurality of nodes such as physical machines and virtual machines operating on the physical machines, and executes a plurality of containers using the plurality of nodes. The information processing device 100 deploys the application to the container execution system 500 by deploying the container of the application on the container execution system 500.

Here, in the second embodiment, Docker is exemplified as software that provides an execution environment for containers. Note that software other than Docker may be used as the software that provides the execution environment for containers. Furthermore, in the second embodiment, OpenShift is exemplified as a container orchestration tool to be used in the container execution system 500. Note that a container orchestration tool other than Openshift may be used.

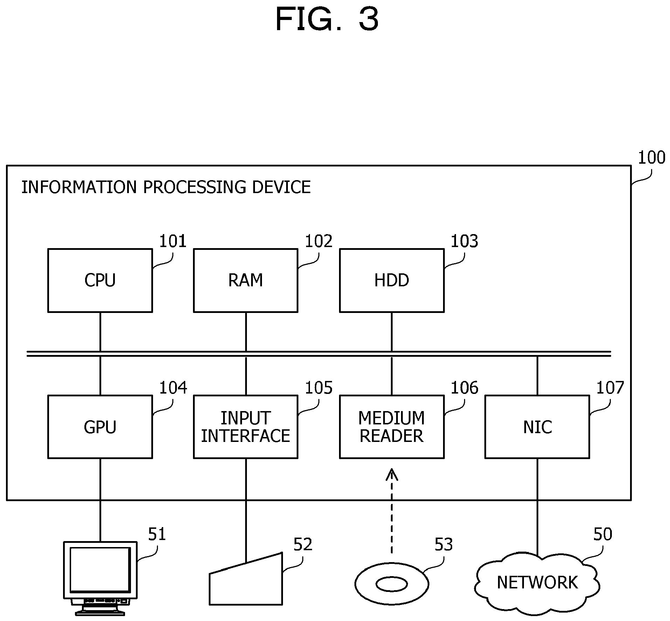

FIG. 3 is a diagram illustrating a hardware example of the information processing device.

The information processing device 100 includes a CPU 101, a RAM 102, an HDD 103, a graphics processing unit (GPU) 104, an input interface 105, a medium reader 106, and a network interface card (NIC) 107. Note that the CPU 101 is an example of the processing unit 12 according to the first embodiment. The RAM 102 or the HDD 103 is an example of the storage unit 11 according to the first embodiment.

The CPU 101 is a processor that executes a program command. The CPU 101 loads at least a part of a program and data stored in the HDD 103 into the RAM 102 and executes the program. Note that the CPU 101 may include a plurality of processor cores. Furthermore, the information processing device 100 may include a plurality of processors. Processing to be described below may be executed in parallel using a plurality of processors or processor cores. Furthermore, a set of the plurality of processors may be referred to as a "multiprocessor" or simply a "processor".

The RAM 102 is a volatile semiconductor memory that temporarily stores the program executed by the CPU 101 and data used by the CPU 101 for arithmetic operations. Note that the information processing device 100 may include a memory of a type different from the RAM, or may include a plurality of memories.

The HDD 103 is a non-volatile storage device that stores a program of software such as an operating system (OS), middleware, and application software, and data. Note that the information processing device 100 may include other types of storage devices such as a flash memory and a solid state drive (SSD), and may include a plurality of non-volatile storage devices.

The GPU 104 outputs an image to a display 51 connected to the information processing device 100 according to the command from the CPU 101. As the display 51, any type of display such as a cathode ray tube (CRT) display, a liquid crystal display (LCD), a plasma display, or an organic electro-luminescence (OEL) display can be used.

The input interface 105 acquires an input signal from an input device 52 connected to the information processing device 100 and outputs the input signal to the CPU 101. As the input device 52, a pointing device such as a mouse, a touch panel, a touch pad, or a trackball, a keyboard, a remote controller, a button switch, or the like can be used. Furthermore, a plurality of types of input devices may be connected to the information processing device 100.

The medium reader 106 is a reading device that reads a program and data recorded on a recording medium 53. As the recording medium 53, for example, a magnetic disk, an optical disk, a magneto-optical (MO) disk, a semiconductor memory, or the like can be used. The magnetic disk includes a flexible disk (FD) and an HDD. The optical disk includes a compact disc (CD) and a digital versatile disc (DVD).

The medium reader 106 copies, for example, the program and data read from the recording medium 53 to another recording medium such as the RAM 102 or the HDD 103. The read program is executed by the CPU 101, for example. Note that the recording medium 53 may be a portable recording medium, and may be used for distribution of the program and data. Furthermore, the recording medium 53 and the HDD 103 may be referred to as computer-readable recording media.

The NIC 107 is an interface that is connected to the network 50 and communicates with another computer through the network 50. The NIC 107 is connected to a communication device such as a switch or a router by a cable, for example. The NIC 107 may be a wireless communication interface.

The app template management server 200, the development management server 300, the container image management server 400, and the container execution system 500 are also implemented by hardware similar to the information processing device 100.

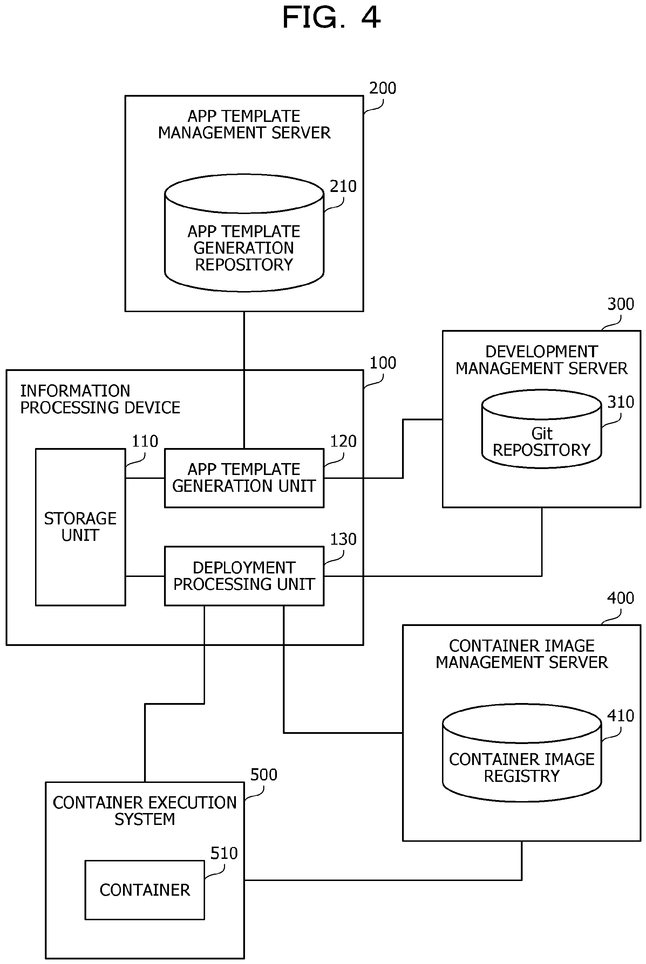

FIG. 4 is a diagram illustrating a functional example of the information processing system.

The information processing device 100 has a storage unit 110, an app template generation unit 120, and a deployment processing unit 130. A storage area of the RAM 102 or the HDD 103 is used as the storage unit 110. The app template generation unit 120 and the deployment processing unit 130 are implemented by the CPU 101 executing a program stored in the RAM 102.

The storage unit 110 stores a management table. The management table is information indicating a template of the code of the application corresponding to a combination of a type of the application, a programming language to be used for development of the application, and a framework to be used for the development, and the container build setting information. The type of the application is abbreviated as app type. The application is abbreviated as app. The container build setting information is data called Dockerfile, and is an example of the container build setting information 41 of the first embodiment. The manifest information is data called a K8s manifest, and is an example of the manifest information 42 of the first embodiment. The manifest information is described in YAML Ain't Markup Language (YAML) format, for example.

Here, the app template management server 200 has an app template generation repository 210. The app template generation repository 210 holds a pre-created template of a code of an app. For example, as the template of a code of an app, a template of the code in the case of using an appropriate programming language and framework is created in advance, and is stored in the app template generation repository 210. Furthermore, the app template generation repository 210 holds the container build setting information and a template of the manifest information created in advance for the template of the code of the app. The container build setting information may be referred to as a Dockerfile. The manifest information may be referred to as a K8s manifest.

For example, information indicating the code of the app in the management table is identification information such as a URL indicating a location of the code of the app on the app template generation repository 210. The information indicating the container build setting information in the management table is identification information such as a URL indicating the location of the container build setting information on the app template generation repository 210. The information indicating the manifest information in the management table is identification information such as a URL indicating a location of the manifest information on the app template generation repository 210.

The app template generation unit 120 receives an input of an app template generation setting file by the user. The app template generation setting file is information indicating the app type, programming language, and framework of the application to be developed. Then, the app template generation unit 120 generates an app template corresponding to the input information on the basis of the management table stored in the storage unit 110. For example, the app template generation unit 120 acquires, from the app template management server 200, the template of the code of the app, the container build setting information, and the manifest information template corresponding to the information of the app template generation setting file.

The app template generation unit 120 inserts predetermined setting values according to the app type of the code of the app, the programming language, and the framework into respective setting items in the acquired manifest information template.

The app template generation unit 120 registers the app template including the template of the code of the app, the container build setting information, and the manifest information template in a Git repository 310 of the development management server 300. The Git repository 310 is a repository that manages the app template generated by the information processing device 100.

Here, the user can edit the code of the app registered in the Git repository 310 and develop an application that provides a desired service, using the information processing device 100, for example.

The deployment processing unit 130 receives an input of an app template deployment setting file by the user. The app template deployment setting file indicates information of the Git repository 310, information of a container image registry 410 in the container image management server 400, and information of a deployment location of the container in the container execution system 500. Then, the deployment processing unit 130 downloads the code of the app, the container build setting information, and the manifest information template from the development management server 300 on the basis of the information of the Git repository 310. The deployment processing unit 130 builds a container image corresponding to the code of the app using the container build setting information, and registers the container image generated by the build in the specified container image registry 410. Here, the container image registry 410 is a Docker registry that holds container images, in other words, Docker images.

Furthermore, the deployment processing unit 130 inserts the information of the specified container image registry 410 and the information of the deployment location of the container into the manifest information template as the setting values of predetermined setting items. Thus, the deployment processing unit 130 completes the manifest information, in other words, the K8s manifest.

The deployment processing unit 130 instructs the container execution system 500 to deploy the application, using the generated manifest information. Therefore, a container corresponding to the application is deployed on the container execution system 500, and the application becomes available.

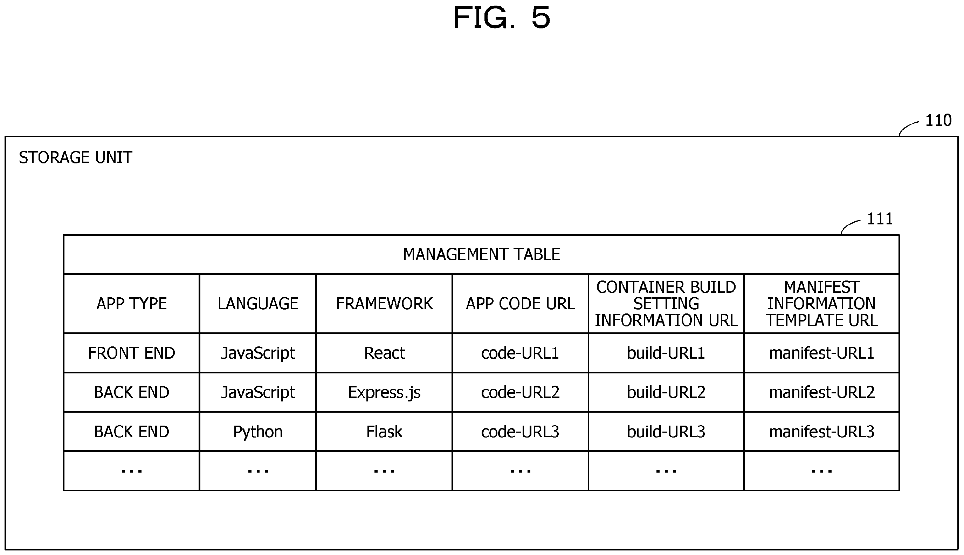

FIG. 5 is a diagram illustrating an example of the management table.

A management table 111 is stored in the storage unit 110. The management table 111 has items of app type, language, framework, app code URL, container build setting information URL, and manifest information template URL. The type of the application is registered in the item of the app type. Examples of the app type include "front end", "back end", "Rest API", "Web API", "database", and the like. A name of the programming language is registered in the item of the language. A name of the framework is registered in the item of the framework. A URL of the template of the code of the app held in the app template generation repository 210 is registered in the item of the app code URL. A URL of the container build setting information held in the app template generation repository 210 is registered in the item of the container build setting information URL. A URL of the manifest information template held in the app template generation repository 210 is registered in the item of the manifest information template URL.

For example, the management table 111 has records of the app type "front end", language "JavaScript", framework "React", app code URL "code-URL1", container build setting information URL "build-URL1", manifest information template URL "manifest-URL1". JavaScript is a registered trademark. The management table 111 also has records indicating the app code URLs, the container build setting information URLs, and the manifest information template URLs for other combinations of the app types, languages, and frameworks. In the diagram, "Python" exemplified as a programming language is a registered trademark.

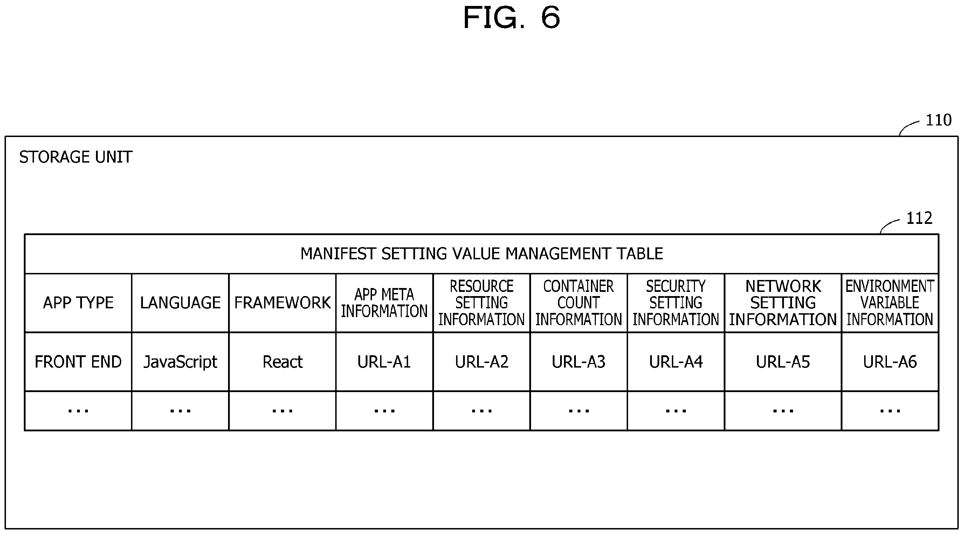

FIG. 6 is a diagram illustrating an example of a manifest setting value management table.

A manifest setting value management table 112 is stored in the storage unit 110. The manifest setting value management table 112 has items of app type, language, framework, app meta information, resource setting information, container count information, security setting information, network setting information, and environment variable information. Information similar to the items of the same names in the management table 111 are set in the items of the app type, language, and framework. Note that, in the manifest setting value management table 112, the app meta information, the resource setting information, the container count information, the security setting information, the network setting information, and the environment variable information are associated with a set of one or more items among the items of the app type, language, and framework.

Pieces of identification information of information of setting values to be inserted into various setting items, which are inserted into the manifest information template, are registered in the items of the app meta information, the resource setting information, the container count information, the security setting information, the network setting information, and the environment variable information. The identification information is a URL of the information of the setting value held in the app template generation repository 210. Furthermore, the app meta information, the resource setting information, the container count information, the security setting information, the network setting information, and the environment variable information are collectively referred to as "setting value information". The setting value information is data describing only the setting values for the appropriate setting items of the manifest information. The setting value information is described in the YAML format, for example, like the manifest information.

A URL of the app meta information is registered in the item of the app meta information. The app meta information corresponds to an identification name of the app. A URL of the resource setting information is registered in the item of the resource setting information. The resource setting information indicates CPU performance or a memory size of the container to be used for the operation of the app. A URL of the container count information is registered in the item of the container count information. The container count information indicates the number of containers to be used for the operation of the app. A URL of the security setting information to be used for the operation of the app is registered in the item of the security setting information. A URL of the network setting information to be used for the operation of the app is registered in the item of the network setting information. A URL of the environment variable information that indicates an environment variable to be used for the operation of the app is registered in the item of the environment variable information.

For example, the manifest setting value management table 112 has records indicating the URLs of the app meta information, the resource setting information, the container count information, the security setting information, the network setting information, and the environment variable information corresponding to the app type "front end", the language "JavaScript", and the framework "React".

The manifest setting value management table 112 has records indicating the URLs of the app meta information, the resource setting information, the container count information, the security setting information, the network setting information, and the environment variable information for other combinations of the app type, language, and framework. For example, the manifest setting value management table 112 may hold a URL of the setting value information such as the app meta information for a certain combination of the app type and language. Alternatively, the manifest setting value management table 112 may hold a URL of the setting value information such as the app meta information only for a certain app type.

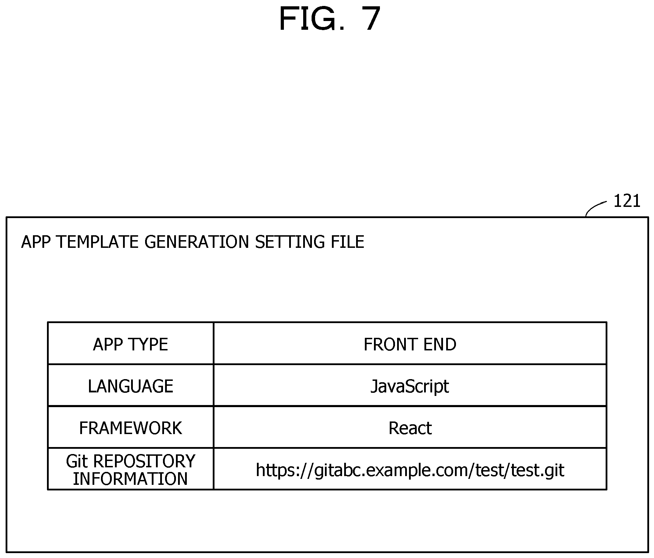

FIG. 7 is a diagram illustrating an example of an app template generation setting file.

An app template generation setting file 121 includes the information indicating the app type, language, and framework, and Git repository information. The Git repository information is a URL of a storage location of the code of the app, the container build setting information, and the manifest information in the Git repository 310. The Git repository information may include other pieces of information such as a project name, a username, and a password to be used to access the Git repository 310.

The app template generation setting file 121 illustrates an example in which the app type "front end", the language "JavaScript", the framework "React", and the Git repository information "https://gitabc.example.com/test/test.git" are specified.

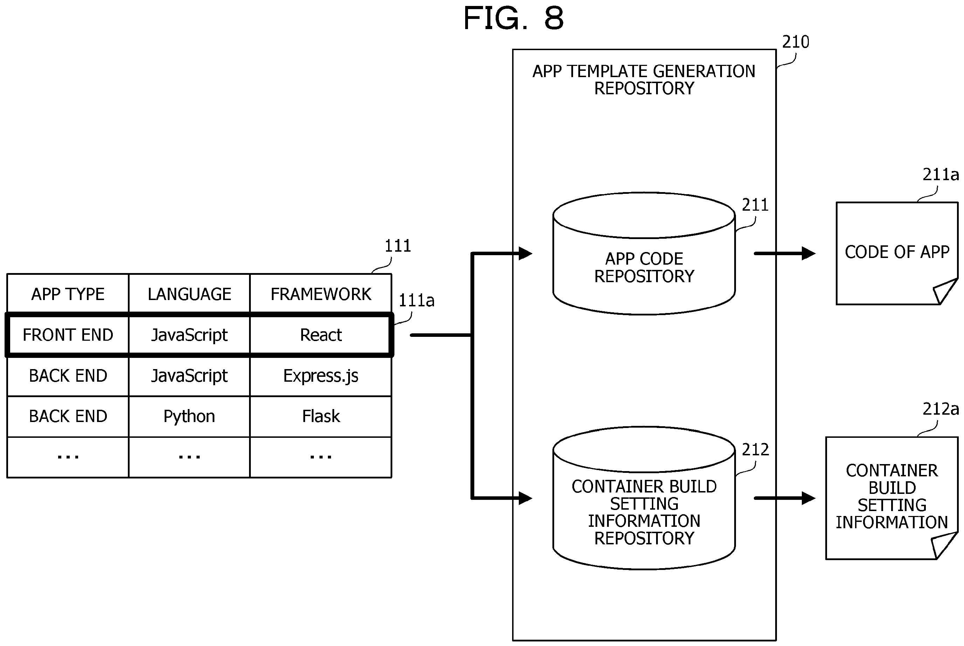

FIG. 8 is a diagram illustrating an acquisition example of the code of the app and the container build setting information.

For example, the app template generation repository 210 has an app code repository 211 and a container build setting information repository 212. For example, the app template generation unit 120 selects a record 111a of the management table 111 on the basis of settings of the app template generation setting file 121. Here, in FIG. 8, illustration of the app code URL and the container build setting information URL in the management table 111 is omitted.

The app template generation unit 120 acquires the app code URL "code-URL1" and the container build setting information URL "build-URL1" from the record 111a. The app template generation unit 120 acquires a code 211a of the app from the app code repository 211 on the basis of the app code URL "code-URL1". Furthermore, the app template generation unit 120 acquires container build setting information 212a from the container build setting information repository 212 on the basis of the container build setting information URL"build-URL1".

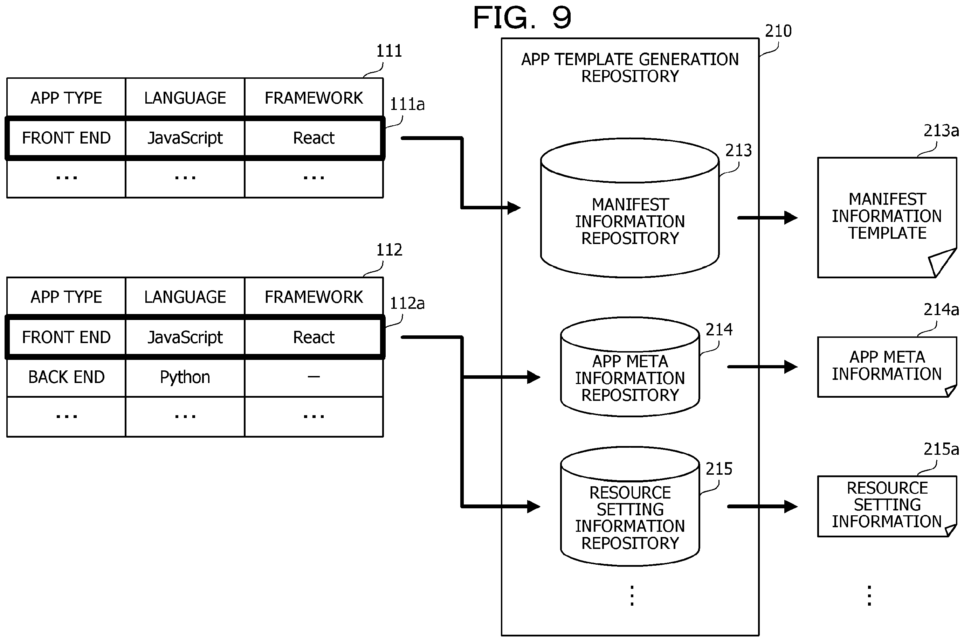

FIG. 9 is a diagram illustrating an acquisition example of the manifest information template and the setting value information.

For example, the app template generation repository 210 has a manifest information repository 213, an app meta information repository 214, and a resource setting information repository 215. Although not illustrated, the app template generation repository 210 has a container count information repository, a security setting information repository, an environment variable information repository, and a network setting information repository.

For example, the app template generation unit 120 selects a record 111a of the management table 111 on the basis of settings of the app template generation setting file 121. Here, in FIG. 9, illustration of the app code URL and the container build setting information URL in the management table 111 is omitted.

The app template generation unit 120 acquires the manifest information template URL "manifest-URL1" from the record 111a. The app template generation unit 120 acquires a manifest information template 213a from the manifest information repository 213 on the basis of the manifest information template URL "manifest-URL1".

Furthermore, the app template generation unit 120 selects a record 112a of the manifest setting value management table 112 on the basis of the settings of the app template generation setting file 121. Here, in FIG. 9, illustration of the items of the setting value information such as the app meta information in the manifest setting value management table 112 is omitted.

The app template generation unit 120 acquires the URLs of the setting value information such as the app meta information from the record 112a. For example, the URLs include a URL "URL-A1" of app meta information and a URL "URL-A2" of the resource setting information. The app template generation unit 120 acquires app meta information 214a from the app meta information repository 214 on the basis of the URL "URL-A1" of the app meta information. The app template generation unit 120 acquires resource setting information 215a from the resource setting information repository 215 on the basis of the URL "URL-A2" of the resource setting information.

The app template generation unit 120 also similarly acquires other pieces of setting value information. For example, the app template generation unit 120 acquires the network setting information corresponding to the app template generation setting file 121 from the network setting information repository on the basis of the URL of the network setting information.

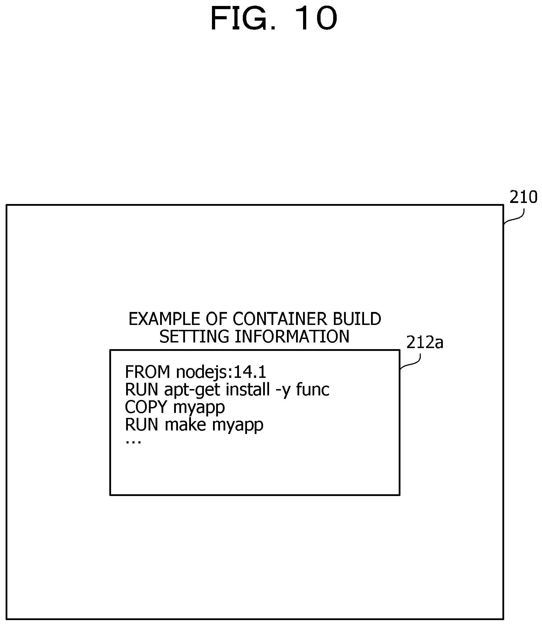

FIG. 10 is a diagram illustrating an example of the container build setting information.

The container build setting information 212a includes, for example, description specifying a base image of a container, a function to be installed in the container, and description specifying, for example, an identification name of the code of the app to be replicated in the container. The container build setting information 212a is complete and ready to use. The app template generation repository 210 also holds other pieces of container build setting information. For example, the user matches the identification name of the source code of the application created by the user itself, such as a file name and the like, with the identification name of the source code in the container build setting information 212a. Then, the deployment processing unit 130 can use the container build setting information 41 to acquire the source code corresponding to the appropriate identification name, and build the container image corresponding to the appropriate application.

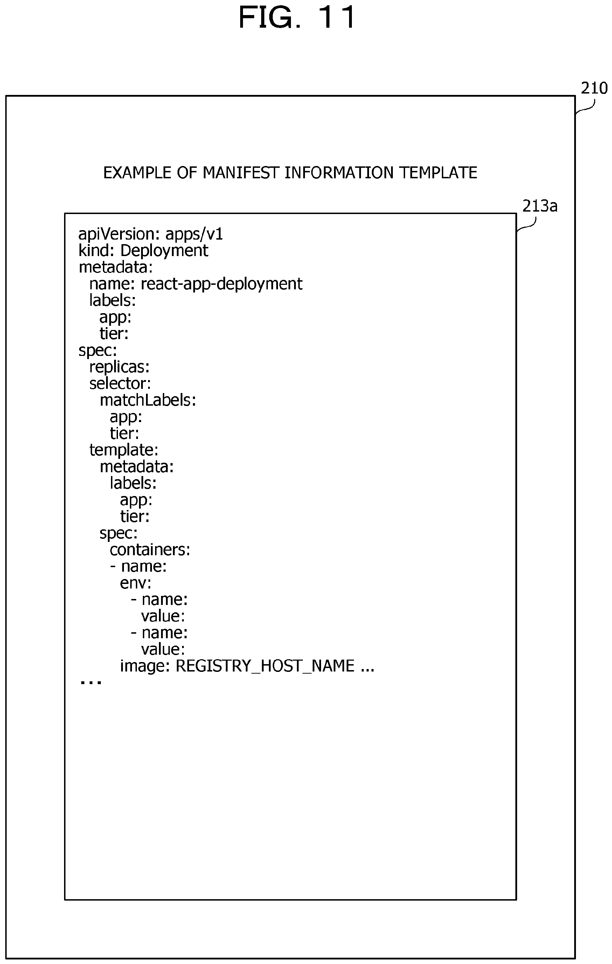

FIG. 11 is a diagram illustrating an example of the manifest information template.

The manifest information template 213a has only item names for the setting items of the app meta information, CPU performance, memory size, and container image acquisition source registry, and the like, and the setting values for the setting items are in a blank state. Furthermore, the manifest information template 213a has placeholder description corresponding to the container registry information specified by the user. For example, description of "REGISTRY_HOST_NAME" is a placeholder for the container registry information. The app template generation repository 210 also holds other pieces of manifest information template information.

Here, the manifest information template 213a is an example of the description corresponding to the app type "front end", the language "JavaScript", and the framework "React". The description of the manifest information template differs depending on the combination of the app type, language, and framework. For example, in the case of the app type "back end", the language "JavaScript", and a framework "Express.js", a database (DB) is needed to store data. Therefore, the manifest information template for the app type "back end", the language "JavaScript", and the framework "Express.js" has YAML description for DB resource creation that is not present in the manifest information template 213a. The DB resources are also implemented by containers.

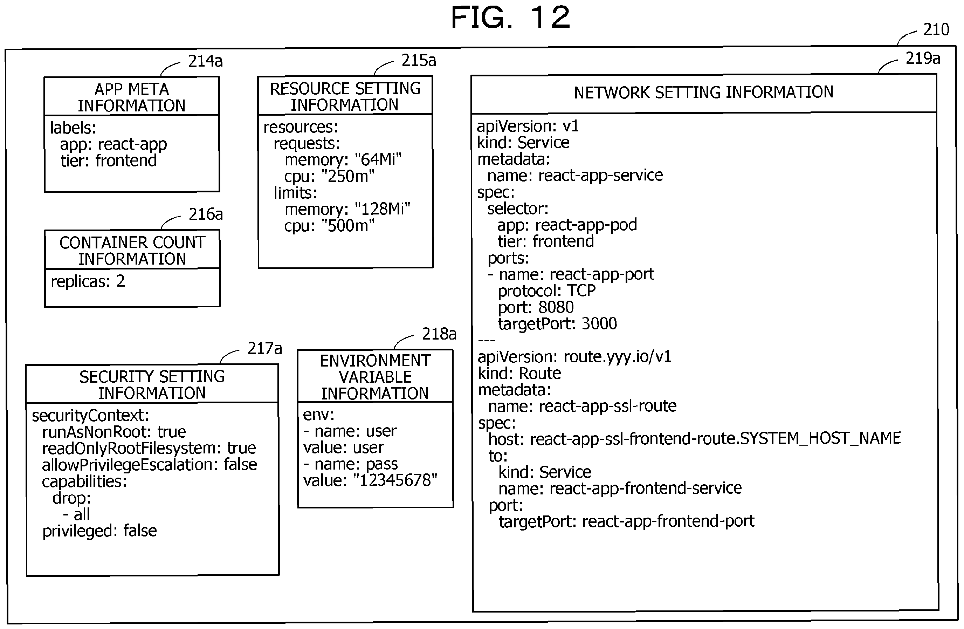

FIG. 12 is a diagram illustrating an example of the setting value information for the manifest information template.

The setting value information corresponding to the app type "front end", the language "JavaScript", and the framework "React" includes app meta information 214a, resource setting information 215a, container count information 216a, security setting information 217a, environment variable information 218a, and network setting information 219a. The app meta information 214a, the resource setting information 215a, the container count information 216a, the security setting information 217a, the environment variable information 218a, and the network setting information 219a hold the item names of the setting items and its setting values. Therefore, by matching the item name with the item name described in the manifest information template 213a, the setting value to be inserted into the manifest information template 213a is specified. Furthermore, the network setting information 219a has description of a placeholder corresponding to container execution system information specified by the user. For example, description "SYSTEM_HOST_NAME" is a placeholder corresponding to the container execution system information.

The app template generation repository 210 also holds other pieces of the app meta information, resource setting information, container count information, security setting information, environment variable information, and network setting information.

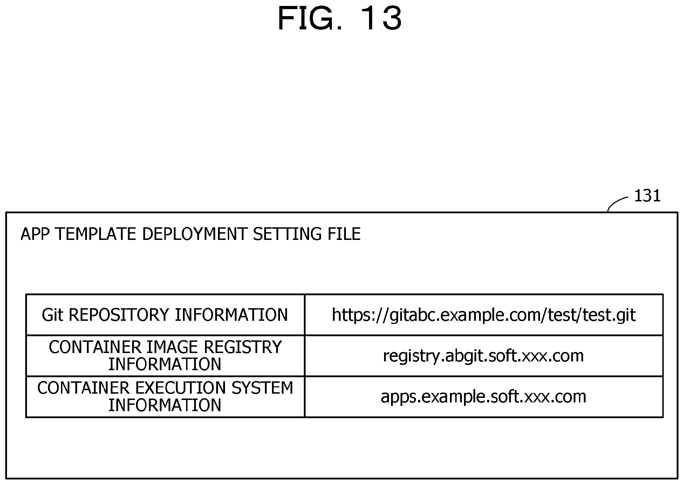

FIG. 13 is a diagram illustrating an example of the app template deployment setting file.

The app template deployment setting file 131 includes Git repository information, container image registry information, and container execution system information.

The Git repository information is a URL indicating storage locations of the code of the app, the container build setting information, and the manifest information template stored in the Git repository 310. The Git repository information may include other pieces of information such as a project name, a username, and a password to be used to access the Git repository 310.

The container image registry information is a URL of the container image stored in the container image registry 410. The container image registry information may include other pieces of information such as a username and a password to be used to access the container image registry 410. The container image registry information may be referred to as Docker registry information.

The container execution system information is a URL indicating the deployment location of the application in the container execution system 500. The container execution system information may also include other pieces of information such as a username and a password to be used to access the container execution system 500. The container execution system information may be referred to as OpenShift information.

The app template deployment setting file 131 illustrates an example in which the Git repository information "https://gitabc.example.com/test/test.git", the container image registry information "registry.abgit.soft.xxx.com", and the container execution system information "apps.example.soft.xxx.com" are specified.

Next, a processing procedure of the information processing device 100 will be described.

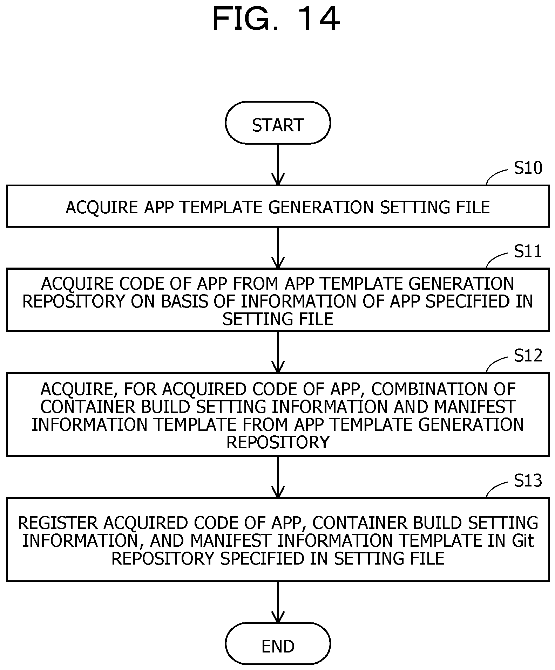

FIG. 14 is a flowchart illustrating a first processing example of the information processing device.

When the program corresponding to the app template generation unit 120 is started, the information processing device 100 executes the following procedure by the app template generation unit 120.

(S10) The app template generation unit 120 acquires the app template generation setting file 121. In the app template generation setting file 121, the app type, the language, the framework, and the Git repository information are specified by the user.

(S11) The app template generation unit 120 acquires the code of the app from the app template generation repository 210 on the basis of the information of the app specified in the app template generation setting file 121, in other words, the app type, the language, and the framework.

(S12) The app template generation unit 120 acquires a combination of the container build setting information (Dockerfile) and the manifest information (K8s manifest) template from the app template generation repository 210 for the acquired code of the app. For example, the app template generation unit 120 acquires the container build setting information and the manifest information template from the app template generation repository 210 on the basis of the information of the app specified in the app template generation setting file 121. Furthermore, the app template generation unit 120 acquires the setting value information such as the app meta information from the app template generation repository 210 on the basis of the information of the app specified in the app template generation setting file 121.

(S13) The app template generation unit 120 registers the acquired code of the app, container build setting information, and manifest information template in the Git repository 310 specified in the app template generation setting file 121. At this time, the app template generation unit 120 inserts the setting value information such as the app meta information into the manifest information template, and registers the manifest information template after inserting the setting value information in the Git repository 310. Then, the processing by the app template generation unit 120 ends.

The user can edit the code of the app registered in the Git repository 310 and develop an application that provides a desired service, using the information processing device 100, for example. Note that, in step S13, in the manifest information template registered in the Git repository 310 by the app template generation unit 120, specific setting values of container registry information and the container execution system information have not yet been set.

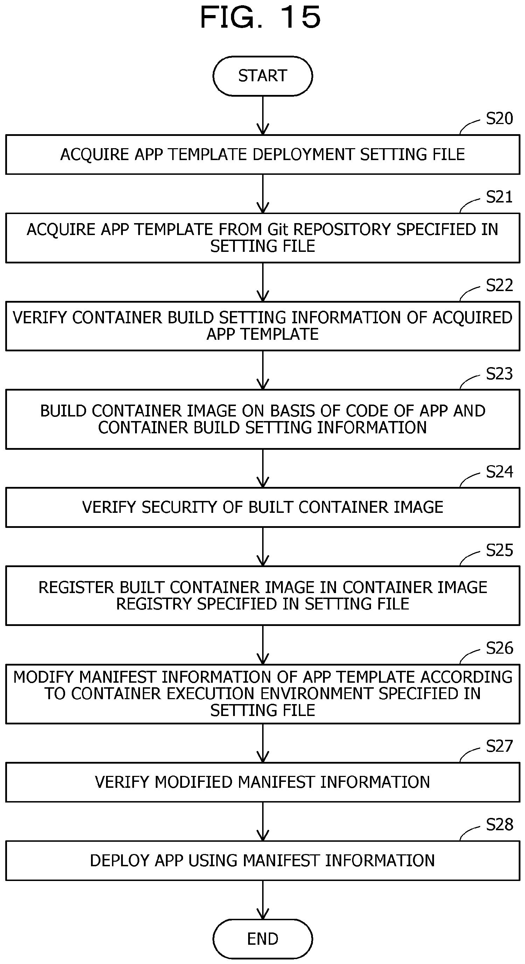

FIG. 15 is a flowchart illustrating a second processing example of the information processing device.

When the program corresponding to the deployment processing unit 130 is started, the information processing device 100 executes the following procedure by the deployment processing unit 130.

(S20) The deployment processing unit 130 acquires the app template deployment setting file 131. In the app template deployment setting file 131, the Git repository information, the container image registry information, and the container execution system information are specified by the user.

(S21) The deployment processing unit 130 acquires an app template from the Git repository 310 specified in the app template deployment setting file 131. The app template includes the code of the app, the container build setting information, and the manifest information template.

(S22) The deployment processing unit 130 verifies the container build setting information of the acquired app template using a predetermined tool.

(S23) The deployment processing unit 130 builds a container image on the basis of the code of the app and the container build setting information.

(S24) The deployment processing unit 130 verifies security of the built container image.

(S25) The deployment processing unit 130 registers the built container image in the container image registry 410 specified in the app template deployment setting file 131.

(S26) The deployment processing unit 130 modifies the manifest information of the app template according to a container execution environment specified in the app template deployment setting file 131. For example, the deployment processing unit 130 inserts the container registry information and the container execution system information into predetermined places indicated by the placeholders in the manifest information template to complete the manifest information.

(S27) The deployment processing unit 130 verifies the modified manifest information.

(S28) The deployment processing unit 130 deploys the app on the container execution system 500, using the manifest information. For example, the deployment processing unit 130 instructs the container execution system 500 to download the container image corresponding to the appropriate app from the container image registry 410 and to deploy the container corresponding to the app, using the container image. Thus, the app developed by the user starts running on the container execution system 500. Then, the processing of the deployment processing unit 130 ends.

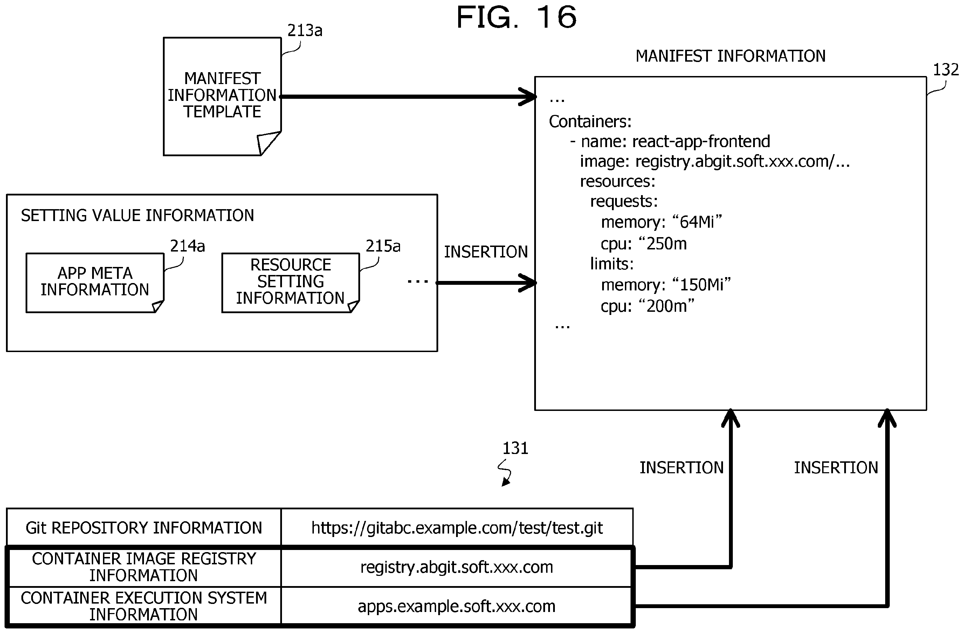

FIG. 16 is a diagram illustrating a generation example of the manifest information.

For example, in step S12 above, the app template generation unit 120 acquires the manifest information template 213a and the setting value information from the app template generation repository 210 on the basis of the app template generation setting file 121. The setting value information includes the app meta information 214a, the resource setting information 215a, the container count information 216a, the security setting information 217a, the environment variable information 218a, and the network setting information 219a. Note that, in FIG. 16, the container count information 216a, the security setting information 217a, the environment variable information 218a, and the network setting information 219a are omitted.

Furthermore, in step S13 above, the app template generation unit 120 inserts the acquired setting value information into the manifest information template 213a. Taking the resource setting information 215a as an example, first, the app template generation unit 120 extracts the item names of the setting items such as "resources:", "requests:", and "memory:" in the YAML description. Then, the app template generation unit 120 specifies blank places of the setting items with the same item names in the manifest information template 213a as places for inserting the setting values of the setting items with the same names in the resource setting information 215a, and inserts the setting values therein.

Then, in step S26 above, the deployment processing unit 130 acquires the container image registry information and the container execution system information on the basis of the app template deployment setting file 131. The deployment processing unit 130 inserts the container image registry information and the container execution system information into the places of the placeholders respectively corresponding to the container image registry information and the container execution system information in the manifest information template 213a. In the above-described example, "REGISTRY_HOST_NAME" in the manifest information template 213a is the placeholder for the container image registry information. Furthermore, "SYSTEM_HOST_NAME" in the manifest information template 213a after inserting the network setting information 219a is the placeholder for the container execution system information.

In this way, the app template generation unit 120 and the deployment processing unit 130 generate manifest information 132 from the manifest information template 213a.

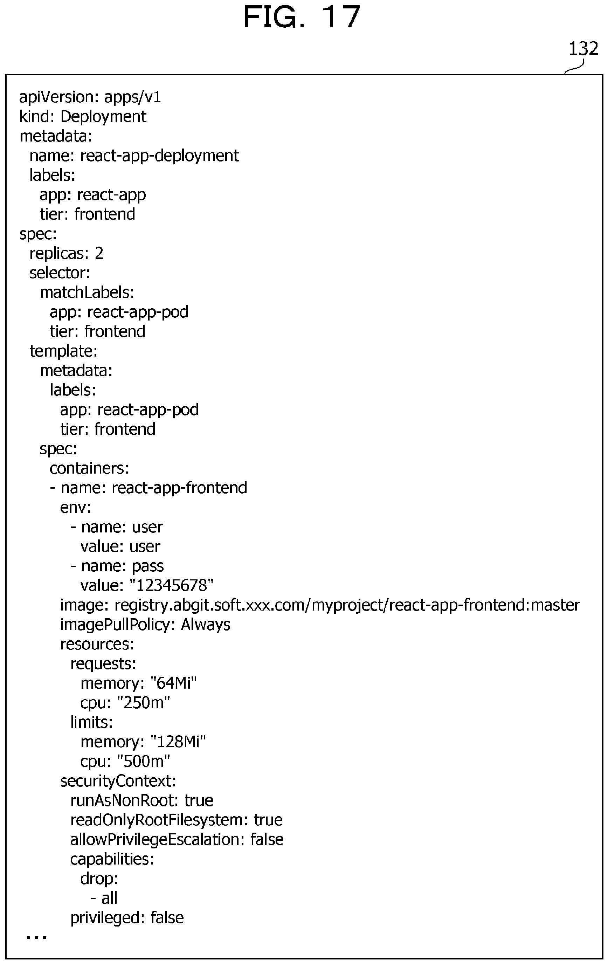

FIG. 17 is a diagram illustrating an example of the generated manifest information.

The app template deployment setting file 131 includes the container image registry information "registry.abgit.soft.xxx.com". Therefore, the deployment processing unit 130 inserts "registry.abgit.soft.xxx.com" into the place of "REGISTRY_HOST_NAME" in the manifest information template 213a.

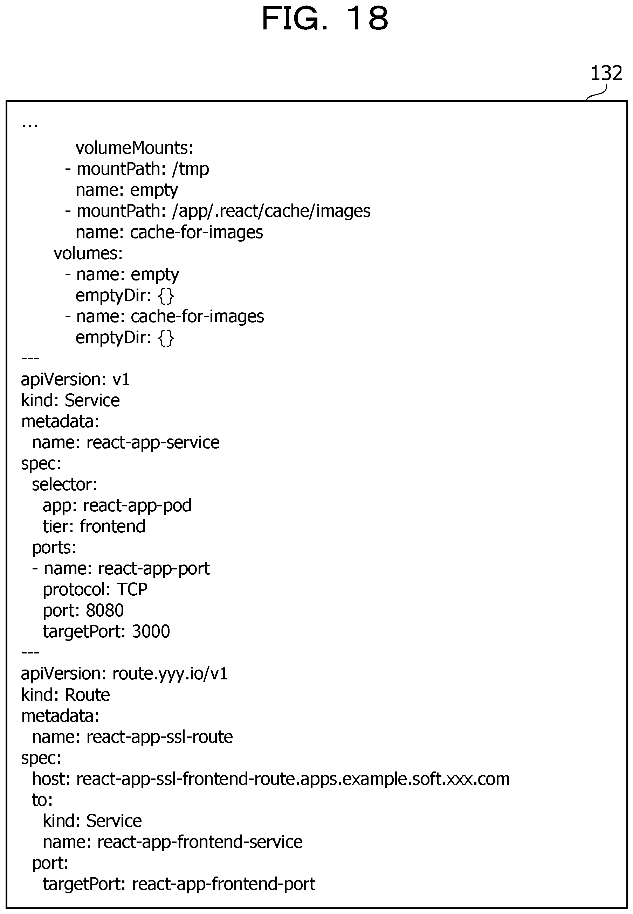

FIG. 18 is a diagram illustrating an example (continued) of the generated manifest information.

The app template deployment setting file 131 includes the container execution system information "apps.example.soft.xxx.com". Therefore, the deployment processing unit 130 inserts "apps.example.soft.xxx.com" into the place of "SYSTEM_HOST_NAME" in the manifest information template 213a after inserting the network setting information 219a.

The deployment processing unit 130 can appropriately instruct the container execution system 500 to deploy the app, using the manifest information 132 generated in this way.

According to the information processing device 100, the user can obtain the container build setting information and the manifest information only by inputting the app template generation setting file 121 and the app template deployment setting file 131. Therefore, the information processing device 100 can reduce the task of creating the container build setting information and the manifest information by the user. Therefore, the user can focus on the developing the code body of the application. Thus, the information processing device 100 can improve the efficiency of the development of the application.

For example, the information processing device 100 executes the following processing.

The information processing device 100 acquires first information indicating the type of a first application to be deployed to the system, the programming language to be used for the development of the first application, and the framework to be used for the development of the first application. Then, the information processing device 100 selects a first template corresponding to the first information from among the plurality of templates of the setting information to be used for deployment of the application, the templates being associated with the type of the application, the programming language, and the framework. The information processing device 100 generates first setting information to be used for deployment of the first application on the basis of the selected first template.

Therefore, the information processing device 100 can improve the efficiency of the development of the application. Note that the app template generation setting file 121 is an example of the first information. The information processing device 100 may acquire the programs (scripts) of the app template generation unit 120 and the deployment processing unit 130, the management table 111, and the manifest setting value management table 112 from a predetermined server computer.

Furthermore, for example, each of the plurality of templates includes a template of the manifest information (manifest information template) to be used for the deployment of the container corresponding to the application by the appropriate system. In generating the first setting information, the information processing device 100 generates the manifest information corresponding to the first application by editing the template of the manifest information included in the first template on the basis of the first information. Therefore, the information processing device 100 can efficiently generate the manifest information suitable for the first application to be developed.

Furthermore, in the editing the template of the manifest information, the information processing device 100 determines the setting values for the setting items included in the template of the manifest information on the basis of the first information, and inserts the determined setting values to the template of the manifest information. Therefore, the information processing device 100 can efficiently generate the manifest information suitable for the first application to be developed.

Furthermore, in the editing of the template of the manifest information, the information processing device 100 acquires second information indicating the acquisition source of the container image and the deployment location of the first application in the system. The information processing device 100 inserts the information indicating the acquisition source of the container image and the information indicating the deployment location of the first application in the system into the template of the manifest information on the basis of the second information. Therefore, the information processing device 100 can efficiently generate the manifest information suitable for a development environment of the first application to be used by the user and the execution environment of the container. The app template deployment setting file 131 is an example of the second information. The container image registry information is an example of the information indicating the acquisition source of the container image. The container execution system information is an example of the information indicating the deployment location of the first application.

Furthermore, each of the plurality of templates includes the container build setting information to be used for generation of the container image corresponding to the application. Therefore, the information processing device 100 can improve the efficiency of the development of the application.

Furthermore, the information processing device 100 acquires third information indicating a container image storage unit that is a registration location of the container image. The information processing device 100 generates the container image corresponding to the first application on the basis of the container build setting information included in the first template and the source code of the first application. The information processing device 100 registers the generated container image in the container image storage unit indicated by the third information. Therefore, the information processing device 100 can improve the efficiency of the development of the application. Note that the container image registry 410 is an example of the container image storage unit. The app template deployment setting file 131 is an example of the third information. The container image registry information is an example of the information indicating the container image storage unit that is the registration location of the container image.

Moreover, each of the plurality of templates includes the information indicating the template of the source code of the application corresponding to the type of the application, the programming language, and the framework. The information processing device 100 outputs the template of the source code of the first application on the basis of the first information and the plurality of templates. Therefore, the information processing device 100 can improve the efficiency of the development of the application.

Note that the information processing according to the first embodiment may be achieved by causing the processing unit 12 to execute the program. Furthermore, the information processing of the second embodiment can be implemented by causing the CPU 101 to execute the program. The program can be recorded in the computer-readable recording medium 113.

For example, the program can be distributed by distributing the recording medium 113 in which the program is recorded. Alternatively, the program may be stored in another computer and distributed via a network. For example, a computer may store (install) the program, which is recorded in the recording medium 113 or received from another computer, in a storage device such as the RAM 102 or the HDD 103, read the program from the storage device, and execute the program.

## Claims

1. A generation program that causes at least one computer to execute a process, the process comprising:
acquiring first information that indicates a type of a first application to be deployed to a system, a programming language to be used for development of the first application, a framework to be used for the development of the first application;
selecting a first template that corresponds to the first information from among a plurality of templates of setting information to be used for deployment of an application, the plurality of templates being associated with a type of the application, a programming language to be used for development of the application, and a framework to be used for the development of the application; and
generating first setting information to be used for the deployment of the first application based on the selected first template.

2. The generation program according to claim 1, wherein
the plurality of templates includes a template of manifest information to be used for deployment of a container that corresponds to the application by the system, and
the generating includes generating the manifest information that corresponds to the first application by editing the template of the manifest information included in the first template based on the first information.

3. The generation program according to claim 2, wherein the editing includes:
determining a setting value for a setting item included in the template of the manifest information based on the first information; and
inserting the determined setting value into the template of the manifest information.

4. The generation program according to claim 2, wherein the editing includes:
acquiring second information that indicates an acquisition source of an image of the container and a deployment location of the first application in the system; and
inserting information that indicates the acquisition source of the image of the container and information that indicates the deployment location of the first application in the system into the template of the manifest information based on the second information.

5. The generation program according to claim 1, wherein
the plurality of templates includes container build setting information to be used for generation of an image of a container that corresponds to the application.

6. The generation program according to claim 5, wherein the process further comprising:
acquiring third information that indicates a memory that is a registration location of the image of the container;
generating the image of the container that corresponds to the first application based on the container build setting information included in the first template and a source code of the first application; and
registering the generated image of the container in the memory indicated by the third information.

7. The generation program according to claim 1, wherein
the plurality of templates includes information that indicates a template of a source code of the application, that corresponds to the type of the application, the programming language, and the framework, and
the process further comprising
outputting the template of the source code of the first application based on the first information and the plurality of templates.

8. A generation method for a computer to execute a process comprising:
acquiring first information that indicates a type of a first application to be deployed to a system, a programming language to be used for development of the first application, a framework to be used for the development of the first application;
selecting a first template that corresponds to the first information from among a plurality of templates of setting information to be used for deployment of an application, the plurality of templates being associated with a type of the application, a programming language to be used for development of the application, and a framework to be used for the development of the application; and
generating first setting information to be used for the deployment of the first application based on the selected first template.

9. The generation method according to claim 8, wherein
the plurality of templates includes a template of manifest information to be used for deployment of a container that corresponds to the application by the system, and
the generating includes generating the manifest information that corresponds to the first application by editing the template of the manifest information included in the first template based on the first information.

10. The generation method according to claim 9, wherein the editing includes:
determining a setting value for a setting item included in the template of the manifest information based on the first information; and
inserting the determined setting value into the template of the manifest information.

11. The generation method according to claim 9, wherein the editing includes:
acquiring second information that indicates an acquisition source of an image of the container and a deployment location of the first application in the system; and
inserting information that indicates the acquisition source of the image of the container and information that indicates the deployment location of the first application in the system into the template of the manifest information based on the second information.

12. The generation method according to claim 8, wherein
the plurality of templates includes container build setting information to be used for generation of an image of a container that corresponds to the application.

13. The generation method according to claim 12, wherein the process further comprising:
acquiring third information that indicates a memory that is a registration location of the image of the container;
generating the image of the container that corresponds to the first application based on the container build setting information included in the first template and a source code of the first application; and
registering the generated image of the container in the memory indicated by the third information.

14. The generation method according to claim 8, wherein
the plurality of templates includes information that indicates a template of a source code of the application, that corresponds to the type of the application, the programming language, and the framework, and
the process further comprising
outputting the template of the source code of the first application based on the first information and the plurality of templates.

15. An information processing device comprising:
a control unit configured to:
acquire first information that indicates a type of a first application to be deployed to a system, a programming language to be used for development of the first application, a framework to be used for the development of the first application,
select a first template that corresponds to the first information from among a plurality of templates of setting information to be used for deployment of an application, the plurality of templates being associated with a type of the application, a programming language to be used for development of the application, and a framework to be used for the development of the application, and
generate first setting information to be used for the deployment of the first application based on the selected first template.
